Europäisches Patentamt

European Patent Office

Office européen des brevets

(11) Veröffentlichungsnummer: **0 395 795**
**A1**

## EUROPÄISCHE PATENTANMELDUNG

(21) Anmeldenummer: **89122124.4**

(22) Anmeldetag: **30.11.89**

(51) Int. Cl.⁵: **F16F 13/00**

(30) Priorität: **29.04.89 DE 3914300**

(43) Veröffentlichungstag der Anmeldung:
**07.11.90 Patentblatt 90/45**

(84) Benannte Vertragsstaaten:
**BE ES FR GB IT NL SE**

(71) Anmelder: **Boge A.G.**
**Bogestrasse 50**
**D-5208 Eitorf/Sieg(DE)**

(72) Erfinder: **Schyboll, Georg**
**Westumer Strasse 69**
**D-5485 Sinzig-Westum(DE)**

(54) **Hydraulisch dämpfendes Gummilager.**

(57) Hydraulisch dämpfendes Gummilager, mit zwei in Axialrichtung einander gegenüberliegenden starren Stirnwänden (1, 2) und mindestens zwei, über einen Dämpfungskanal (12) verbundenen axial hintereinander angeordneten Kammern (9, 10). Bei einem Gummilager dieser Art sollte der Dämpfungskanal (12) in seiner Länge und/oder seinem Querschnitt von außen einstellbar bzw. nachstellbar sein.

Dieses Problem wird derart gelöst, daß die Trennwand (13) quer zur Lagerachse geteilt ausgebildet ist, wobei beide Hälften (13a, 13b) der Trennwand (13) zusammen die Begrenzungswände des Dämpfungskanales bilden und daß die eine Hälfte (13a) fest eingespannt, während die zweite Hälfte (13b) axial beweglich und in Umfangsrichtung verdrehbar gelagert ist.

FIG.1

EP 0 395 795 A1

Die Erfindung bezieht sich auf ein hydraulisch dämpfendes Gummilager, insbesondere Motorlager für Kraftfahrzeuge, mit zwei in Axialrichtung einander gegenüberliegenden starren Stirnwänden und mindestens zwei axial hintereinander angeordneten, Dämpfungsflüssigkeit enthaltenen Kammern, wobei die Kammern durch einen, in einer zwischen den Kammern angeordneten Trennwand, verlaufenden Dämpfungskanal miteinander verbunden sind.

Derartige Gummilager dienen der Lagerung von Antriebsaggregaten in Fahrzeugen aller Art. Bei der Lagerung von Verbrennungsmotoren in Kraftfahrzeugen ist einerseits zur Vermeidung der Geräuschübertragung eine möglichst weiche Lagerung mit geringer Eigendämpfung erforderlich, die jedoch die von der Fahrbahn angeregten Motorbewegungen sehr groß werden und fast ungedämpft ausschwingen läßt. Andererseits können die großen Motorbewegungen durch harte Lagerungen bzw. separate Stuckerdämpfer verringert werden, was jedoch wieder zu erheblichen Geräuschübertragungen auf die Karosserie führt.

Gummilager dieser Art sind bekannt (z.B. DE-OS 30 19 337), bei denen die erzielte Dämpfungswirkung und die erzielte Isolierwirkung unabhängig voneinander optimiert werden können, wobei sowohl eine gute Dämpfungs eigenschaft als auch eine gute Isolierwirkung vorhanden ist. Im Prinzip wird dabei ein im Abstand um die Lagerachse verlaufender Kanal vorgesehen. Das Prinzip dieses Kanales beruht darauf, daß die Dämpfungswirkung nicht auf Drosselung im herkömmlichen Sinne mit Umwandlung der auftretenden Stoßenergie in Wärmeenergie beruht, sondern auf der Trägheit der im ringförmigen Durchtrittskanal verschobenen Flüssigkeitsmenge. Der ringförmige Durchtrittskanal ist dabei in einem starren Bauteil aufgenommen und die Länge des Kanales durch die geometrischen Gegebenheiten vorbestimmt. Nachteilig ist, daß eine Veränderung der Kanallänge nur durch konstruktive Änderung des starren Bauteils erfolgen kann.

Darüber hinaus sind Motorlager bekannt (z.B. DE-PS 37 03 820), bei denen der ringförmige Drosselkanal durch Einlegen von Trennelementen so gestaltet wird, daß vor dem Zusammenbau des Gummilagers die Länge des Durchtrittskanales entsprechend verändert werden kann.

Aufgabe der Erfindung ist es, ein hydraulisch dämpfendes Motorlager so weiterzubilden, daß der Dämpfungskanal in seiner Länge und/oder seinem Querschnitt von außen einstellbar bzw. nachstellbar ist.

Zur Lösung ist erfindungsgemäß vorgesehen, daß die Trennwand quer zur Lagerachse geteilt ausgebildet ist, wobei beide Hälften der Trennwand zusammen die Begrenzungswände des Dämpfungskanales bilden und daß die eine Hälfte am Umfang fest eingespannt ist, während die zweite Hälfte durch eine außerhalb der Kammer angeordnete Vorrichtung axial beweglich und in Umfangsrichtung verdrehbar gelagert ist.

Vorteilhaft ist bei dieser Ausbildung, daß sowohl die Länge als auch unabhängig davon, der Querschnitt stufenlos veränderbar sind, so daß damit ebenfalls das Dämpfungsmaximum stufenlos für einen bestimmten Frequenzbereich festgelegt werden kann.

Nach einem weiteren wesentlichen Merkmal ist vorgesehen, daß der Dämpfungskanal ringförmig um die Lagerachse verläuft. Vorteilhaft ist hierbei, daß jeweils die Ein- und Austrittsöffnung zu der entsprechenden Kammer auf gegenüberliegenden Seiten angeordnet ist, so daß eine Öffnung des Dämpfungskanales in der ersten Hälfte und die zweite Öffnung in der zweiten, verdrehbaren Hälfte, angeordnet ist. Durch eine entsprechende Verdrehung des zweiten Teiles können dann die Öffnungen zueinander auf dem Umfang des ringförmig verlaufenden Dämpfungskanales gegeneinander verschoben werden, so daß sich eine entsprechende Verkürzung oder Verlängerung des Dämpfungskanales ergibt.

Eine fertigungstechnisch besonders günstige Ausführungsform sieht vor, daß zur Bildung des Dämpfungskanales in einer Hälfte eine Nut vorgesehen ist, in die ein der Nut entsprechender Vorsprung der anderen Hälfte eingreift. Vorteilhaft ist hierbei, daß durch axiale Bewegung des Vorsprunges zusammen mit der zweiten Hälfte eine Veränderung des Querschnittes des Dämpfungskanales erzielt werden kann. Beide Bewegungen, die axiale sowie die in Umfangsrichtung, lassen sich somit getrennt und unabhängig voneinander ausführen.

Eine Vorrichtung zur Betätigung der entsprechenden Bewegungen ist nach einer günstigen Ausführungsform so ausgebildet, daß die Vorrichtung die axiale Beweglichkeit der zweiten Hälfte unabhängig von der Umfangsbewegung ausführen kann.

Eine weitere Ausgestaltung sieht vor, daß die zweite Hälfte der Trennwand eine gegenüber der ersten Hälfte vorgespannte und dem Querschnitt des Dämpfungskanales entsprechende Feder zur Umlenkung der Dämpfungsflüssigkeit aufweist.

Gemäß einer vorteilhaften Ausführung der Erfindung wird die Vorrichtung elektrisch bzw. elektronisch angetrieben, gegebenenfalls unter Zuhilfenahme einer angepaßten Elektronik.

Bevorzugte Ausführungsbeispiele der Erfindung sind in den Zeichnungen näher erläutert.

Es zeigt:

Figur 1 einen axialen Längsschnitt eines Motorlagers

Figur 2 eine weitere Ausführungsform eines Motorlagers zusammen mit einer elektrisch angetriebenen Vorrichtung.

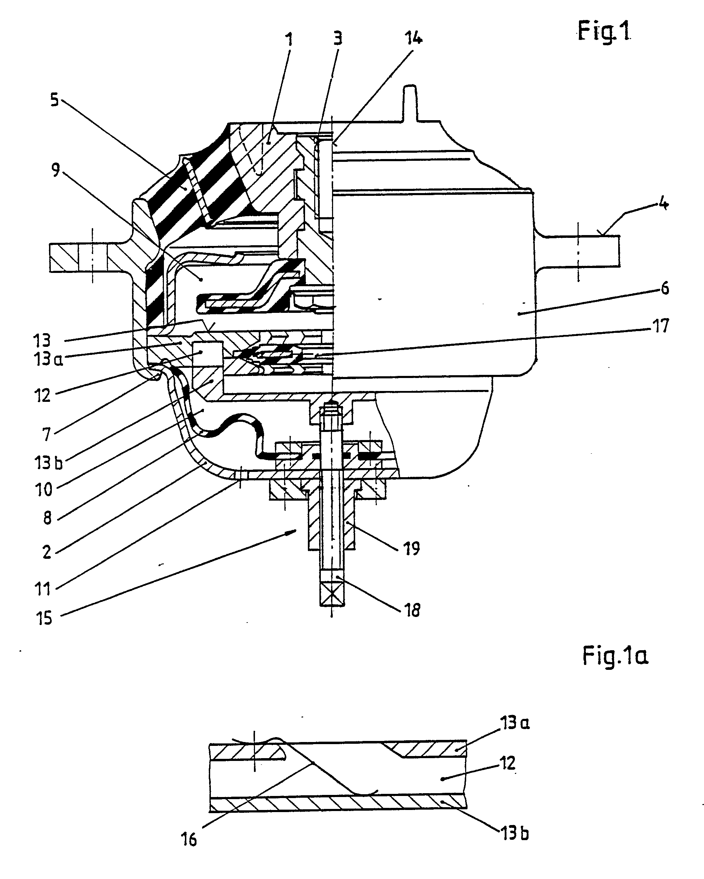

Das Motorlager nach Figur 1 besitzt zwei in axiale Richtung einander gegenüberliegende Stirnwände 1 und 2. Die Stirnwand 1 ist zu ihrer Befestigung entweder mit einer Gewindebohrung 3 oder mit einem nicht gezeichneten Gewindestift versehen. Entsprechend trägt die als Deckplatte ausgebildete Stirnwand 2 am Verbindungsflansch 6 einen Befestigungsflansch 4.

An die kegelig ausgebildete Mantelfläche der Stirnwand 1 ist eine als gummielastisches Federelement 5 ausgebildete Umfangswand anvulkanisiert, die in ihrer der Stirnwand 1 abgewandten Anschlußfläche mit dem Verbindungsflansch 6 vereinigt ist. Der Verbindungsflansch 6 umfaßt ferner eine Bördelung 7, die die Trennwand 13, einen Faltenbalg 8 und die als Deckplatte ausgebildete Stirnwand 2 aufnimmt.

Das Motorlager besitzt somit zwei durch die Trennwand 13 voneinander getrennte, Dämpfungsflüssigkeit enthaltene Kammern 9 und 10, in denen die Kammer 9 als Druckkammer und die Kammer 10 als drucklos volumenaufnehmender Ausgleichsraum ausgebildet ist. In der Stirnwand 2 ist eine Entlüftungsbohrung 11 vorgesehen.

Die Trennwand 13 enthält einen in einer radialen Ebene ringförmig um die zentrale Lagerachse 14 verlaufenden Dämpfungskanal 12, welcher die beiden Kammern 9 und 10 miteinander verbindet. Der Dämpfungskanal 12 ist in seiner Länge und in seinem Querschnitt derart einstellbar, daß die Resonanzfrequenz der während des dämpfenden Lagerbetriebes im ringförmigen Dämpfungskanal 12 verschobenen Flüssigkeitsmasse im Zusammenwirken mit den Elastizitäten des gummielastischen Federelementes 5 und dem flexiblen Bereich 17 der Trennwand 13 im wesentlichen der Resonanzfrequenz des Fahrzeugmotors auf dessen Aufhängung entspricht.

Die erste Hälfte 13a der Trennwand 13 ist an ihrem äußeren Umfang fest eingespannt und mit dem Verbindungsflansch 6 fest verbunden. Die zweite Hälfte 13b der Trennwand 13 ist über die Vorrichtung 15 sowohl axial als auch in Umfangsrichtung bewegbar. Der Dämpfungskanal 12 besitzt Ein- bzw. Austrittsöffnungen, die in je eine Stirnfläche der ersten Hälfte 13a und der zweiten Hälfte 13b münden.

Die Vorrichtung 15 weist einen Gewindebolzen 18 auf, der durch Verdrehen die zweite Hälfte 13b in Umfangsrichtung bewegt und somit eine Längenänderung des Dämpfungskanales 12 vornimmt. Über die Hubmutter 19 wird die zweite Hälfte 13b der Trennwand 13 axial bewegt, so daß der Dämpfungskanal 12 in seinem Querschnitt veränderbar ist.

In der Figur 1a ist ein Ausschnitt des Dämpfungskanales 12 gezeigt, wobei im oberen Bereich die erste Hälfte 13a und im unteren Bereich die zweite Hälfte 13b der Trennwand 13 gezeigt ist. Über die Feder 16, die in den Dämpfungskanal 12 hineinragt, wird die Dämpfungsflüssigkeit entsprechend umgelenkt, so daß bei Verdrehen über den Umfang der Hälften 13a und 13b eine Längenänderung des Dämpfungskanales 12 erzielbar ist.

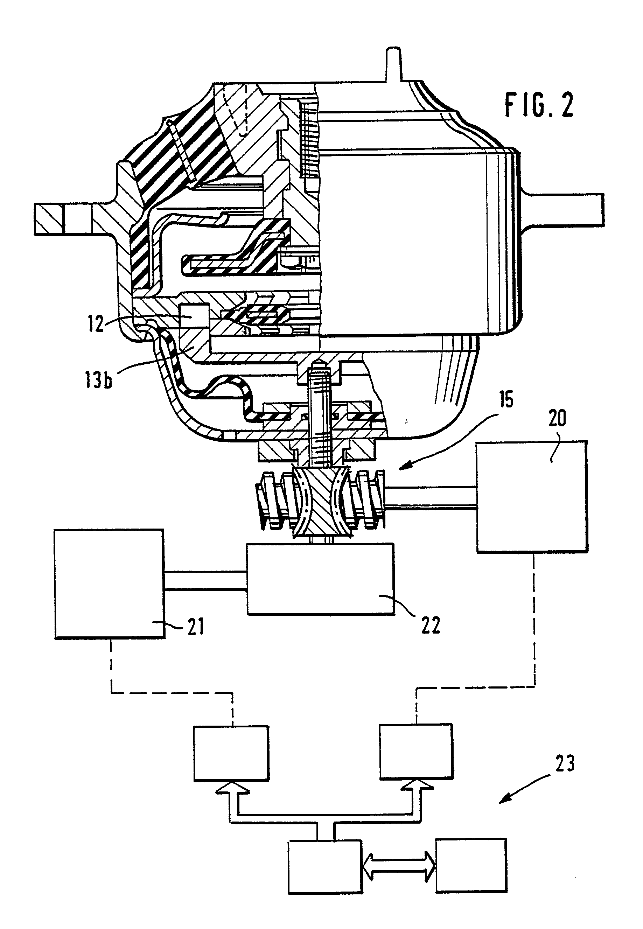

In der Figur 2 ist im Prinzip ein hydraulisch dämpfendes Motorlager wie in Figur 1 dargestellt, gezeigt mit dem Unterschied, daß als Vorrichtung 15 zur Längen- und Querschnittsveränderung des Dämpfungskanales 12 ein Schrittmotor 20 zur axialen Bewegung und ein Schrittmotor 21, welcher über ein Winkelgetriebe 22 die zweite Hälfte 13b in Umfangsrichtung verdreht, angeordnet. Die Steuerung der Schrittmotoren 20 und 21 kann über eine entsprechende Elektronik erfolgen.

Bezugszeichenliste

    1 - Stirnwand
    2 - Stirnwand (Deckplatte)
    3 - Gewindebohrung
    4 - Befestigungsflansch
    5 - Gummielastisches Federelement
    6 - Verbindungsflansch
    7 - Bördelung
    8 - Faltenbalg
    9 - Kammer (Druckkammer)
    10 - Kammer (Ausgleichsraum)
    11 - Entlüftungsöffnung
    12 - Dämpfungskanal
    13 - Trennwand
    14 - Lagerachse
    15 - Vorrichtung
    16 - Feder
    17 - Flexibler Bereich
    18 - Gewindebohrung
    19 - Hubmutter
    20 - Schrittmotor
    21 - Schrittmotor
    22 - Winkelgetriebe
    23 - Elektronik

Ansprüche

1. Hydraulisch dämpfendes Gummilager, insbesondere Motorlager für Kraftfahrzeuge, mit zwei in Axialrichtung einander gegenüberliegenden starren Stirnwänden und mindestens zwei axial hintereinander angeordneten, Dämpfungsflüssigkeit enthaltenden Kammern, wobei die Kammern durch einen, in einer zwischen den Kammern angeordneten Trennwand, verlaufenden Dämpfungskanal miteinander verbunden sind, dadurch gekennzeichnet,

daß die Trennwand (13) quer zur Lagerachse (14) geteilt ausgebildet ist, wobei beide Hälften (13a, 13b) der Trennwand (13) zusammen die Begrenzungswände des Dämpfungskanales (12) bilden und daß die eine Hälfte (13a) am Umfang fest eingespannt ist, während die zweite Hälfte (13b) durch eine außerhalb der Kammer (10) angeordnete Vorrichtung (15) axial beweglich und in Umfangsrichtung verdrehbar gelagert ist.

2. Gummilager nach Anspruch 1,
dadurch gekennzeichnet,
daß der Dämpfungskanal (12) ringförmig um die Lagerachse (14) verläuft.

3. Gummilager nach Anspruch 1,
dadurch gekennzeichnet,
daß zur Bildung des Dämpfungskanales (12) in einer Hälfte (13a) eine Nut vorgesehen ist, in die ein der Nut entsprechender Vorsprung der anderen Hälfte (13b) eingreift.

4. Gummilager nach Anspruch 1,
dadurch gekennzeichnet,
daß die Vorrichtung (15) so ausgebildet ist, daß die axiale Beweglichkeit der zweiten Hälfte (13b) unabhängig von der Umfangsbewegung ausführbar ist.

5. Gummilager nach Anspruch 1,
dadurch gekennzeichnet,
daß die zweite Hälfte (13b) der Trennwand (13) eine gegenüber der ersten Hälfte (13a) vorgespannten und dem Querschnitt des Dämpfungskanales (12) entsprechende Feder (16) zur Umlenkung der Dämpfungsflüssigkeit aufweist.

6. Gummilager nach Anspruch 1,
dadurch gekennzeichnet,
daß die Vorrichtung (15) elektrisch bzw. elektronisch angetrieben wird, gegebenenfalls unter Zuhilfenahme einer angepaßten Elektronik.

**Fig.1**

**Fig.1a**

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-155646 (METZELER KAUTSCHUK GMBH) <br> * Seite 2, Zeile 11 – Seite 6, Zeile 31; Ansprüche 1, 4, 7, 8; Figuren 1, 2, 8, 9 * <br> ---- | 1-4 | F16F13/00 |
| X | EP-A-243715 (LEMFÖRDER METALLWAREN AG) <br> * Seite 2, Spalte 1, Zeile 5 – Seite 3, Spalte 3, Zeile 42; Ansprüche 1, 2; Figuren 1-3 * <br> ---- | 1-3, 6 | |
| A | PATENT ABSTRACTS OF JAPAN <br> vol. 12, no. 149 (M-694)(2996) 10 Mai 1988, <br> & JP-A-62 270841 (HONDA MOTOR CO. LTD.) 25 November 1987, <br> * das ganze Dokument * <br> ---- | 1, 6 | |
| A | EP-A-265681 (PIRELLI ACCESSORI INDUSTRIALI) <br> * Ansprüche 4, 5; Figuren 3-5 * <br> ---- | 5 | |
| A | EP-A-216082 (SOCIETE APPLICAZIONI GOMMA ANTIVIBRANTI) <br> * Seite 2, Spalte 2, Zeile 13 – Seite 3, Spalte 4, Zeile 17; Ansprüche 1-6; Figuren 1, 2 * <br> ---- | 1, 2, 6 | **RECHERCHIERTE SACHGEBIETE (Int. Cl.5)** |
| A | GB-A-2186052 (HONDA GIKEN K.K.) <br> * Ansprüche 1, 2; Figuren 1-3 * <br> ------ | 1, 2, 6 | F16F |

Der vorliegende Recherchenbericht wurde für alle Patentansprüche erstellt

| Recherchenort | Abschlußdatum der Recherche | Prüfer |
|---|---|---|
| DEN HAAG | 16 JULI 1990 | SINGER G.M. |